# EUROPÄISCHE PATENTSCHRIFT

(11) **EP 0 571 812 B1**
(45) Veröffentlichungstag und Bekanntmachung des Hinweises auf die Patenterteilung: **14.02.1996**
(21) Anmeldenummer: 93107637.6
(22) Anmeldetag: 11.05.1993
(51) Int. Cl.: B01D 19/00, C02F 1/20, C02F 9/00

(54) **Anordnung zum Entfernen von Verunreinigungen aus dem Grundwasser**
Device for removing volatile contaminants from ground water
Dispositif pour enlever des polluants de la nappe souterraine

(30) Priorität: 29.05.1992 DE 4217825; 20.08.1992 DE 4227570
(43) Veröffentlichungstag der Anmeldung: 01.12.1993
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- EP-A- 0 418 570
- EP-A- 0 418 572
- EP-A- 0 486 976
- WO-A-90/11811

## Beschreibung

Die Erfindung betrifft eine Anordnung zum Entfernen von insbesondere leichtflüchtigen Verunreinigungen aus dem Grundwasser und dem von ihm durchströmten Erdreich durch Erzeugen eines Grundwasserkreislaufes in dem verunreinigten Bereich, wobei der Kreislauf über einen bis in den Bereich des verunreinigten Grundwassers getriebenen Brunnenschacht mit mindestens bereichsweise durchlässiger Schachtwandung und über mindestens einen Düsenkörper der eine Filtereinrichtung zum Entfernen der Verunreinigungen geführt ist, und der Brunnenschacht durch mindestens eine Trennwandung in gegeneinander abgedichtete Brunnenschachtbereiche unterteilt ist und durch die Trennwandung ein mit einer Förderpumpe versehenes Rohr hindurchgeführt ist. Solche Anordnungen sind beispielsweise aus EP 0 418 572, EP 0 486 976, EP 0 418 570 und WO 9 011 811 bekannt. Durch die Erzeugung von Grundwasserkreisläufen zwischen Erdreich und Brunnen ist eine Erfassung von Kontaminationen in relativ großer Entfernung vom Brunnenschacht möglich, ohne jedoch eine Ausbreitung der Kontaminationen in unverseuchte Bereiche bei der Sanierung befürchten zu müssen.

Der Erfindung liegt die Aufgabe Zugrunde, eine Anordnung der eingangs genannten Art so auszubilden, daß sie sich besser an unterschiedliche Einsatzverhältnisse anpassen läßt.

Die gestellte Aufgabe wird erfindungsgemäß dadurch gelöst, daß das Rohr in mindestens einem der Brunnenschachtbereiche durch eine Öffnung eine Verbindung mit dem betreffenden Brunnenraum hat, in dem unterhalb dieser Öffnung liegenden Rohrabschnitt die Förderpumpe aufweist und in einem oberhalb dieser Öffnung liegenden Rohrabschnitt mit einer zusätzlichen Förderpumpe versehen ist.

Durch die Öffnung wird das Rohr praktisch in zwei Abschnitte unterteilt. Durch diese Aufteilung des Rohres und durch die Anordnung von Förderpumpen in den beiden gebildeten Rohrabschnitten lassen sich zwei getrennte, insbesondere aber einander überlappende Kreisläufe schaffen, durch welche im Bereich der Reinigungsvorrichtung sich immer ein für diese Reinigungsvorrichtung optimales Durchlaufvolumen einstellen läßt, unabhängig davon, wie stark sich das Umlaufvolumen in dem den Brunnenschacht umgebenden Erdreich und in anderen Brunnenschachtabschnitten gestalten läßt. Beispielsweise kann bei ungünstigen Bodenbedingungen mit einer langsamen Grundwasserströmung durch das umgebende Erdreich trotzdem ein lebhafter Grundwasserumlauf im Reinigungsbereich der Anordnung erreicht werden.

Bei den erfindungsgemäß ausgebildeten Anordnungen kann die Rohröffnung unterschiedlich gestaltet sein. Vorteilhafterweise kann die Rohröffnung durch eine Unterteilung des Rohres in zwei Abschnitte an der Unterteilungsstelle gebildet sein. Dabei kann das Rohr beiderseits der Unterteilung auch unterschiedliche Durchmesser aufweisen. Von den in beiden Rohrabschnitten angeordneten Förderpumpen kann mindestens eine in ihrer Förderrichtung umschaltbar sein, und die Förderpumpen können zweckmäßig in ihrer Förderleistung unabhängig voneinander einstellbar sein. Auf diese Weise läßt sich einerseits die Strömungsrichtung in den Kreisläufen wählen und andererseits das Umlaufvolumen in den gebildeten beiden Kreisläufen feinfühlig steuern.

Die erfindungsgemäßen Anordnungen können jeweils eine Durchlaufkammer für das zu reinigende Grundwasser aufweisen, in welche der obere Rohrabschnitt mit seinem oberen Ende mündet. Die Durchlaufkammer kann beispielsweise Teil einer Filtereinrichtung sein. Sie kann aber auch Teil einer Begasungseinrichtung sein, mit welcher durch Erzeugen von Unterdruck beispielsweise Frischluft aus einem unterhalb des Grundwasserspiegels im Brunnenschacht angeordneten Düsenkörper durch das Grundwasser hindurchgeleitet wird.

Eine weitere Begünstigung der Steuerung der sich ganz oder teilweise überschneidenden Einzelkreisläufe ist dadurch erzielbar, daß der Brunnenschachtbereich, in welchem sich die Verbindungsöffnung des Rohres befindet, mit einem benachbarten Brunnenschachtbereich durch eine Trennwandungsöffnung verbindbar sein kann, die mit einem Ventil verschließbar ist, das druckabhängig einen Strömungsausgleich zwischen benachbarten Brunnenschachtbereichen erlaubt.

Nachfolgend werden Ausführungsbeispiele einer erfindungsgemäß ausgebildeten Anordnung der eingangs genannten Art anhand der beiliegenden Zeichnungen näher erläutert, die jeweils einen schematischen Teillängsschnitt durch einen Brunnenschacht zeigen.

Im einzelnen zeigen:
- Fig. 1 - 3: eine erste, zweite und dritte Ausführungsform der Anordnung, wobei die Einrichtung zum Entfernen der Verunreinigungen jeweils eine Begasungseinrichtung ist;
- Fig. 4: eine der Fig. 2 entsprechende Ausführungsform der Anordnung, bei welcher die Einrichtung zum Entfernen der Verunreinigungen eine Filtereinrichtung ist.

Alle Figuren zeigen jeweils einen Teil eines in einen Bohrschacht eingebrachten Brunnenrohres 10, das mit Abstand voneinander zwei Abschnitte 10.1 und 10.2 mit flüssigkeitsdurchlässiger Wandung aufweist. Zwischen den beiden flüssigkeitsdurchlässigen Wandungsabschnitten 10.1 und 10.2 des vertikal eingesetzten Brunnenrohres 10 ist das Brunnenrohr durch eine dicht eingesetzte Trennwand 11 in einen oberen Reinigungsbereich 12 und in einen unteren Sammelbereich 13 unterteilt.

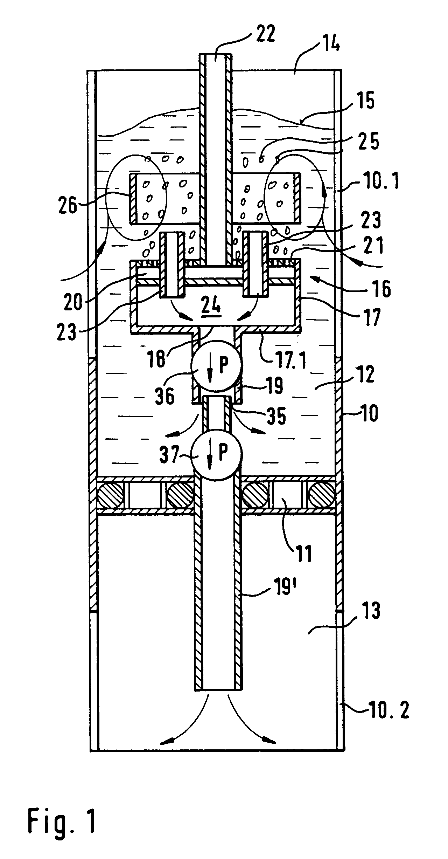

Bei den Ausführungsbeispielen nach den Figuren 1 - 3 wird in dem oberen freien Bereich 14 des Brunnenrohres in bereits bekannter Weise durch einen hier nicht dargestellten, aufgesetzten Ventilator ein Unterdruck erzeugt, durch welchen innerhalb des Brunnenrohres eine Anhöhung des Grundwasserspiegels 15 erreicht wird.

Bei diesen drei Ausführungsbeispielen ist als Einrichtung zur Entfernung der Verunreinigungen innerhalb des Reinigungsbereiches 12 des Brunnenrohres unterhalb des normalerweise durch den Unterdruck erhöhten Grundwasserspiegels 15 eine Gasbehandlungsvorrichtung 16 angeordnet. Sie besteht aus einem dosenartigen zylindrischen Einsatzgehäuse 17, in dessen eine Durchlaufkammer 24 begrenzender Bodenwandung 17.1 eine zentrale Öffnung 18 ausgebildet ist, von der aus sich ein erster und oberer Abschnitt 19 eines zentralen Rohres nach unten erstreckt. Am oberen Ende des Einsatzgehäuses 17 ist eine Gaskammer 20 ausgebildet, die nach oben durch die Deckwandung des Einsatzgehäuses begrenzt ist, die als Düsenplatte 21 ausgebildet ist. Die Gaskammer 20 ist über ein zentrales, nach oben und außen geführtes Verbindungsrohr 22 mit einer Gasquelle, beispielsweise mit der Außenluft, verbunden. Durch die Gaskammer 20 hindurch führen Rohrstutzen 23 nach oben, die eine Verbindung der Durchlaufkammer 24 des Einsatzgehäuses 17 in den oberen Teil des Reinigungsbereiches 12 schaffen, wo konzentrisch zu dem Verbindungsrohr 22 ein Strömungsleitring 26 angeordnet ist. Die Rohrstutzen 23 können im Bereich der Gaskammer 20 Gaseintrittsöffnungen aufweisen, wie bei einer Anordnung nach der DE-PS 38 11 962, in welcher auch Zweck und Wirkungsweise dieser Rohrstutzen beschrieben sind.

An den oberen Rohrabschnitt 19, in welchem eine Förderpumpe 36 angeordnet ist, schließt sich ein zweiter und unterer Rohrabschnitt 19' an, der bei der Ausführungsform nach Fig. 1 am oberen Ende einen kleineren Durchmesser aufweist und so mit dem unteren Ende des oberen Rohrabschnittes 19 eine ringförmige Öffnung 35 bildet. Der untere Rohrabschnitt 19', in welchem ebenfalls eine Förderpumpe 37 angeordnet ist, ist durch eine passende zentrale Öffnung in der Trennwandung 11 hindurch bis in den Sammelbereich 13 des Brunnenrohres 10 geführt. Zweck der Reinigungsvorrichtung ist es, durch den in dem oberen Brunnenrohrbereich 14 erzeugten Unterdruck das in die Gaskammer 20 eingebrachte Gas durch die Düsenplatte 21 hindurch in Form von Gasblasen 25 durch das im Reinigungsbereich 12 befindliche kontaminierte Grundwasser hindurchzusaugen, wobei es leichtflüchtige Verunreinigungen aus dem Grundwasser aufnimmt. Bei stärkerem Unterdruck im Brunnenbereich 14 wird dabei eine sehr starke Bewegung des Grundwassers im oberen Teil des Reinigungsbereiches 12 hervorgerufen. Durch einen Leitring 26 wird eine geordnete Kreisströmung des oberhalb der Düsenplatte 21 stark bewegten Grundwassers erzielt, die das Wasser mehrfach in den Bereich der aufsteigenden Gasblasen 25 bewegt. Insgesamt entsteht durch die aufsteigenden Gasblasen ein sogenannter Airlift-Effekt, der zur Ausbildung eines Grundwasserkreislaufes durch die das Bohrloch umgebenden Bodenschichten hindurch ausgenutzt wird. Je nach Förderrichtung der beiden Förderpumpen 36 und 37 strömt dabei das Grundwasser aus dem Reinigungsbereich 12 durch den durchlässigen Wandungsabschnitt 10.1 des Brunnenrohres 10 hindurch nach außen in das umgebende Erdreich oder umgekehrt, und durch den unteren flüssigkeitsdurchlässigen Wandungsabschnitt 10.2 des Brunnenrohres 10 strömt Grundwasser in den Sammelbereich 13 und wird von dort durch das Rohr 19 in das Einsatzgehäuse 17 und von dort durch die Rohrstutzen 23 hindurch nach oben in den Reinigungsbereich 12 nachgezogen oder umgekehrt.

Fig. 1 zeigt ein Ausführungsbeispiel, das in Fällen eingesetzt wird, bei welchen der Grundwasserauslauf aus dem Brunnenrohrabschnitt durch dichtes Erdreich erschwert ist. Das Grundwasser wird durch den Wandungsabschnitt 10.1 mittels der Förderpumpe 36 in den Reinigungsbereich 12 eingeholt. Ein Teil des dabei die Durchlaufkammer 24 durchströmenden Grundwassers gelangt durch die ringförmige Öffnung 35 zurück in den Reinigungsbereich 12 und wird somit mehrfach begast, bevor es durch den unteren Rohrabschnitt 19' in den Sammelbereich 13 zum Wiederaustritt in das umgebende Erdreich gelangt. Die Pumpen 36 und 37 sind in ihrer Förderleistung einstellbar.

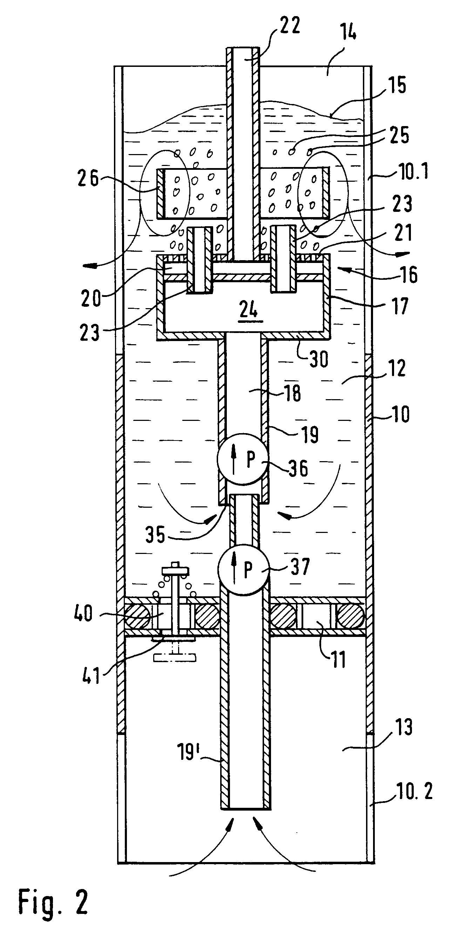

Das Ausführungsbeispiel nach Fig. 2 ist zum Einsatz in Bodenbereichen vorgesehen, bei welchen der Grundwasserzulauf in den unteren Sammelbereich 13 des Brunnenschachtes zu gering ist, um eine gute Wirkungsweise der Anordnung zu gewährleisten. In diesem Fall wird durch die Förderpumpe 36 Grundwasser aus dem unteren Teil des Reinigungsbereiches 12 durch den Ringspalt 35 in das Rohr 19' angesaugt und nach oben gefördert. Das Wasser aus dem Sammelbereich 13 wird durch die Förderpumpe 37 laufend dazugefördert, so daß ein lebhafter Grundwasserumlauf im Reinigungsbereich 12 aufrechterhalten bleibt. Ein Einwegventil mit einer einstellbar federbelasteten Ventilplatte 41 in einer Durchgangsöffnung 40 der Trennwandung 11 reguliert den im Sammelbereich auftretenden Unterdruck, indem es bei Überschreiten eines eingestellten Unterdruckwertes die Öffnung 40 freigibt und eine Verbindung des Sammelbereiches 13 mit dem Reinigungsbereich 12 schafft.

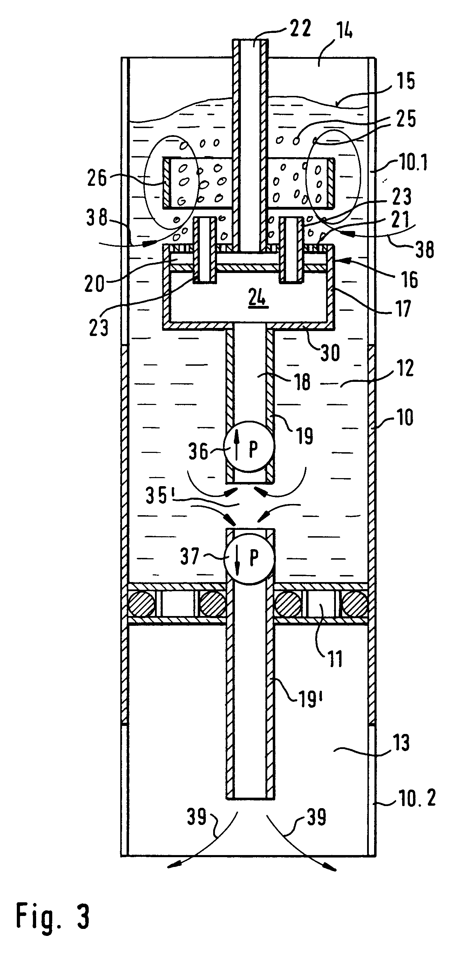

Bei der Ausführungsform nach Fig. 3 ist zwischen den beiden Rohrabschnitten 19 und 19' ein größerer Abstand und so eine große Öffnung 35' in dem Reinigungsbereich 12 geschaffen. Die im oberen Rohrabschnitt 19 angeordnete Förderpumpe 36 ist zur Wasserförderung nach oben eingestellt, während die im unteren Rohrabschnitt 19' angeordnete Pumpe 37' zu einer Förderung des Grundwassers nach unten geschaltet ist. Die Anordnung nach Fig. 3 erlaubt eine Umkehrung des in der Umgebung des Brunnenschachtes erzeugten Grundwasser-Kreislaufes. Durch die Saugwirkung der beiden Pumpen 36' und 37' wird im Gegensatz zu den Ausführungsformen nach Fig. 1 und 2 das Grundwasser entsprechend den eingetragenen Pfeilen 38 in den Reinigungsbereich 12 eingezogen und dort durch den herrschenden Unterdruck und die Förderpumpe 36' in Umlauf gehalten. Ein Teil dieses umlaufenden und bereits einer Reinigung unterzogenen Grundwassers und auch ein Anteil von ungereinigtem Grundwasser werden durch die Pumpe 37' nach unten durch die Trennwandung 11 hindurch in den Sammelbereich 13 gefördert, von wo aus das Grundwasser durch die wasserdurchlässige Schachtwandung 10.2 in den umgebenden Bodenbereich ausströmen kann, wie durch Pfeile 39 in Fig. 3 angezeigt ist.

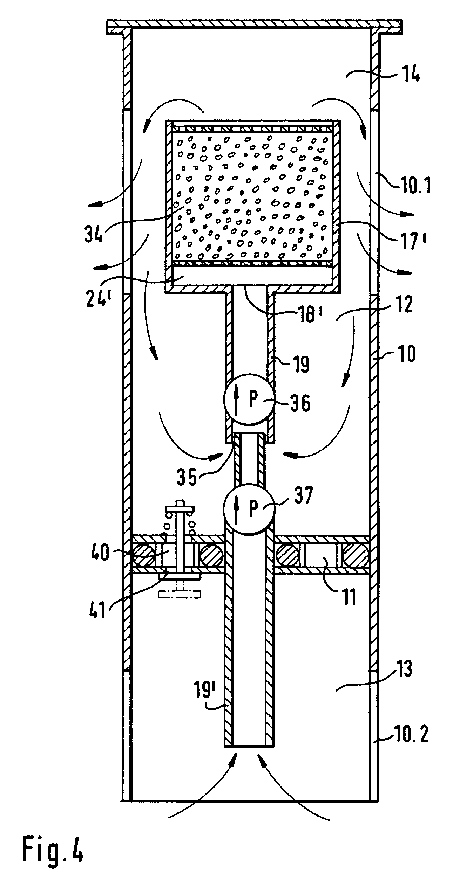

Das aus Fig. 4 ersichtliche Ausführungsbeispiel unterscheidet sich von dem Ausführungsbeispiel nach Fig. 2 dadurch, daß anstelle einer Begasungseinrichtung mit einem Einsatzkörper 17 ein Einsatzkörper 17' einer Filtereinrichtung angeordnet ist. Im Innern des Einsatzkörpers 17' befindet sich ein Filterkörper oder eine Filterschüttfüllung 34, und der obere Rohrabschnitt 19 mündet über eine Bodenöffnung 18' direkt in den Rohreinsatz 17', der die Durchlaufkammer 24' bildet. Im oberen Bereich 14 des Brunnenrohres 10 besteht kein Unterdruck.

Bei allen gezeigten Ausführungsbeispielen bilden sich zwei Kreisläufe von Grundwasser, ein Hauptkreislauf durch das umgebende Erdreich und durch die beiden Brunnenrohrbereiche 12 und 13 hindurch, und ein zusätzlicher innerer Kreislauf im Brunnenrohr über die dort angeordnete Reinigungseinrichtung. Beide Kreisläufe überschneiden sich. Es kann aber auch eine weitgehende Trennung der Kreisläufe erzielt werden, wenn wie beim Ausführungsbeispiel nach Fig. 3 die Förderpumpen mit unterschiedlicher Förderrichtung betrieben werden.

## Patentansprüche

1. Anordnung zum Entfernen von insbesondere leichtflüchtigen Verunreinigungen aus dem Grundwasser und dem von ihm durchströmten Erdreich durch Erzeugen eines Grundwasserkreislaufes in dem verunreinigten Bereich, wobei der Kreislauf über einen bis in den Bereich des verunreinigten Grundwassers getriebenen Brunnenschacht (10) mit mindestens bereichsweise durchlässiger Schachtwandung (10.1, 10.2) und über mindestens einen Düsenkörper (20, 21) geführt ist, und der Brunnenschacht durch mindestens eine Trennwandung (11) in gegeneinander abgedichtete Brunnenschachtbereiche (12, 13) unterteilt ist und durch die Trennwandung (11) ein mit einer Förderpumpe (37) versehenes Rohr (19') hindurchgeführt ist, dadurch gekennzeichnet, daß das Rohr in mindestens einem der Brunnenschachtbereiche durch eine Öffnung (35, 35') eine Verbindung mit dem betreffenden Brunnenschachtbereich (12) hat, in dem unterhalb dieser Öffnung (35, 35') liegendem Rohrabschnitt die Förderpumpe (37) aufweist und in einem oberhalb dieser Öffnung (35, 35') liegenden Rohrabschnitt (19) mit einer zusätzlichen Förderpumpe (36, 36') versehen ist.

2. Anordnung nach Anspruch 1, dadurch gekennzeichnet, daß die Rohröffnung (35, 35') durch eine Unterteilung des Rohres in zwei Abschnitte (19, 19') an der Unterteilungsstelle gebildet ist.

3. Anordnung nach Anspruch 1 und 2, dadurch gekennzeichnet, daß die Rohrabschnitte (19, 19') beiderseits der Unterteilung unterschiedliche Durchmesser aufweisen.

4. Anordnung nach einem der Ansprüche 1 bis 3, dadurch gekennzeichnet, daß der obere Rohrabschnitt (19) oben in einer Durchlaufkammer (24) endet, die Teil einer Begasungseinrichtung ist, mit welcher durch Erzeugen von Unterdruck beispielsweise Frischluft aus einem unterhalb des Grundwasserspiegels (15) im Brunnenschacht angeordneten Düsenkörper (20/21) durch das Grundwasser hindurchgeleitet wird.

5. Anordnung nach Anspruch 4 und 6, dadurch gekennzeichnet, daß die Durchlaufkammer (24) in einem Brunnenschacht-Einsatzgehäuse (17) unterhalb des Düsenkörpers (20/21) ausgebildet und über durch den Düsenkörper (20/21) hindurchgeführte oder durch an ihm vorbeiführende Flüssigkeitskanäle (23) mit dem gasdurchströmten Reinigungsbereich (12) eines Brunnenschachtbereiches verbunden ist.

6. Anordnung zum Entfernen von insbesondere leichtflüchtigen Verunreinigungen aus dem Grundwasser und dem von ihm durchströmten Erdreich durch Erzeugen eines Grundwasserkreislaufes in dem verunreinigten Bereich, wobei der Kreislauf über einen bis in den Bereich des verunreinigten Grundwassers getriebenen Brunnenschacht (10) mit mindestens bereichsweise durchlässiger Schachtwandung (10.1, 10.2) und über mindestens eine Filtereinrichtung (17') zum Entfernen der Verunreinigungen geführt ist, und der Brunnenschacht durch mindestens eine Trennwandung (11) in gegeneinander abgedichtete Brunnenschachtbereiche (12, 13) unterteilt ist und durch die Trennwandung (11) ein mit einer Förderpumpe (37) versehenes Rohr (19') hindurchgeführt ist, dadurch gekennzeichnet, daß das Rohr in mindestens einem der Brunnenschachtbereiche durch eine Öffnung (35, 35') eine Verbindung mit dem betreffenden Brunnenschachtbereich (12) hat, in dem unterhalb dieser Öffnung (35, 35') liegendem Rohrabschnitt die Förderpumpe (37) aufweist und in einem oberhalb dieser Öffnung (35, 35') liegenden Rohrabschnitt (19) mit einer zusätzlichen Förderpumpe (36, 36') versehen ist.

7. Anordnung nach Anspruch 6, dadurch gekennzeichnet, daß die Rohröffnung (35, 35') durch eine Unterteilung des Rohrs in zwei Abschnitte (19, 19') an der Unterteilungsstelle gebildet ist.

8. Anordnung nach Anspruch 6 und 7, dadurch gekennzeichnet, daß die Rohrabschnitte (19, 19') beiderseits der Unterteilung unterschiedliche Durchmesser aufweisen.

9. Anordnung nach einem der Ansprüche 6 bis 8, dadurch gekennzeichnet, daß der obere Rohrabschnitt (19) oben in einer Durchlaufkammer (24') endet, die Teil einer Filtereinrichtung ist.

10. Anordnung nach einem der Ansprüche 1 bis 9, dadurch gekennzeichnet, daß mindestens eine der Förderpumpen (36, 37) in ihrer Förderrichtung umschaltbar ist.

11. Anordnung nach einem der Ansprüche 1 bis 10, dadurch gekennzeichnet, daß die Förderpumpen (36, 37; 36', 37') in ihrer Förderleistung unabhängig voneinander einstellbar sind.

12. Anordnung nach einem der Ansprüche 1 - 11, dadurch gekennzeichnet, daß der Brunnenschachtbereich (12), in welchem sich die Öffnung (35) des Rohres (19/19') befindet, mit einem benachbarten Brunnenschachtbereich (13) durch eine Trennwandungsöffnung, die mit einem Ventil (41) verschließbar ist, zusätzlich verbindbar ist.

## Claims

1. An arrangement for the removal of particularly readily volatile impurities from groundwater and the soil it flows through by generating a groundwater circulation in the polluted area, and that the circulation is ducted via a wellshaft (10) which is driven into the area of the polluted groundwater with an at least partially permeable shaft wall (10.1, 10.2) and via at least one nozzle arrangement (20, 21), and the wellshaft is divided by at least one separating wall (11) into wellshaft areas (12, 13) which are sealed from each other, and through the separating wall (11) is passed a pipe (19') which is provided with a feed pump (37), **characterized in that** the pipe has, via an opening (35, 35'), at least in one of the wellshaft areas a connection to the respective wellshaft area (12) with the feed pump (37) in the pipe section located below said opening (35, 35') and an additional feed pump (36, 36') in a pipe section (19) positioned above said opening (35, 35').

2. An arrangement according to Claim 1, **characterized in that** the pipe opening (35, 35') is formed by division of the pipe into two sections (19, 19') at the point of division.

3. An arrangement according to Claim 1 and 2, **characterized in that** the pipe sections (19, 19') have different diameters on both sides of the division.

4. An arrangement according to one of Claims 1 to 3, **characterized in that** the upper pipe section (19) terminates at the top in a through-flow chamber (24) which is part of a gasing device by means of which a negative pressure is generated which ducts, for example, fresh air from a nozzle arrangement (20/21) which is positioned in the wellshaft below groundwater level (15) through the groundwater.

5. An arrangement according to Claim 4 and 6, **characterized in that** the through-flow chamber (24) is established in a wellshaft-insert housing (17) below the nozzle arrangement (20/21) and connected via fluid channels (23), which are ducted through or past the nozzle arrangement (20/21), to the purification area (12) of a wellshaft area which is flowed through by gas.

6. An arrangement for the removal of particularly readily volatile impurities from groundwater and the soil it flows through by generating a groundwater circulation in the polluted area, and that the circulation is ducted via a wellshaft (10) which is driven into the area of the polluted groundwater with an at least partially permeable shaft wall (10.1, 10.2) and via at least one filtering device (17') for the removal of impurities, and that the wellshaft is divided by at least one separating wall (11) into wellshaft areas (12, 13) which are sealed from each other, and that a pipe which is provided with a feed pump (37) is passed through, **characterized in that** the pipe has, in at least one of the wellshaft areas, via an opening (35, 35') a connection to the respective wellshaft area (12), with the feed pump (37) in the pipe section below said opening (35, 35') and with an additional feed pump (36, 36') provided in a pipe section (19) above said opening (35, 35').

7. An arrangement according to Claim 6, **characterized in that** the pipe opening (35, 35') is formed by dividing the pipe into two sections (19, 19') at the dividing point.

8. An arrangement according to Claim 6 and 7, **characterized in that** the pipe sections (19, 19') have different diameters on both sides of the division.

9. An arrangement according to one of Claims 6 to 8, **characterized in that** the upper pipe section (19) terminates at the top in a through-flow chamber (24') which is part of a filtering device.

10. An arrangement according to one of Claims 1 to 9, **characterized in that** at least one of the feed pumps (36, 37) has a switchable feed direction.

11. An arrangement according to one of Claims 1 to 10, **characterized in that** the feed output of the feed pumps (36, 37; 36', 37') can be set independently from each other.

12. An arrangement according to one of Claims 1 - 11, **characterized in that** the wellshaft area (12) which houses the opening (35) of the pipe (19/19') is additionally connectible to an adjacent wellshaft area (13) by way of a separating wall opening which is sealable by means of a valve (41).

## Revendications

1. Dispositif pour enlever des polluants, en particulier volatils, de l'eau souterraine et du sol parcouru par celle-ci par génération d'un circuit d'eau souterraine dans la zone polluée, le circuit étant conduit par l'intermédiaire d'un puits (10) entraîné jusque dans la zone de l'eau souterraine polluée avec paroi de puits (10.1, 10.2) perméable au moins par zones et par l'intermédiaire d'un corps à buses (20, 21) au moins, et le puits étant subdivisé par au moins une paroi de séparation (11) en zones de puits (12, 13) rendues étanches l'une par rapport à l'autre et un tube (19') muni d'une pompe de circulation (37) étant conduit à travers la paroi de séparation (11), caractérisé en ce que le tube a dans au moins une des zones de puits une liaison par une ouverture (35, 35') avec la zone de puits (12) concernée, présente la pompe de circulation (37) dans la section de tube située au-dessous de cette ouverture (35, 35') et est muni d'une pompe de circulation supplémentaire (36, 36') dans une section de tube (19) située au-dessus de cette ouverture (35, 35').

2. Dispositif selon la revendication 1, caractérisé en ce que l'ouverture de tube (35, 35') est formée par une subdivision du tube en deux sections (19, 19') à l'endroit de subdivision.

3. Dispositif selon les revendications 1 et 2, caractérisé en ce que les sections de tube (19, 19') présentent des diamètres différents des deux côtés de la subdivision.

4. Dispositif selon l'une des revendications 1 à 3, caractérisé en ce que la section de tube supérieure (19) se termine en haut dans une chambre de passage (24) qui fait partie d'un dispositif de gazéification avec lequel par exemple de l'air frais est conduit à travers l'eau souterraine par génération d'une dépression depuis un corps à buses (20/21) disposé dans le puits au-dessous du niveau de l'eau souterraine (15).

5. Dispositif selon les revendications 4 et 6, caractérisé en ce que la chambre de passage (24) est formée dans un boîtier d'insert de puits (17) au-dessous du corps à buses (20/21) et est reliée à la zone de nettoyage parcourue par les gaz (12) d'une zone de puits par l'intermédiaire de canaux de liquide (23) conduits à travers le corps à buses (20/21) ou passant devant celui-ci.

6. Dispositif pour enlever des polluants, en particulier volatils, de l'eau souterraine et du sol parcouru par celle-ci par génération d'un circuit d'eau souterraine dans la zone polluée, le circuit étant conduit par l'intermédiaire d'un puits (10) entraîné jusque dans la zone de l'eau souterraine polluée avec paroi de puits (10.1, 10.2) perméable au moins par zones et par l'intermédiaire d'au moins un dispositif de filtre (17') pour l'enlèvement des polluants, et le puits étant subdivisé par au moins une paroi de séparation (11) en zones de puits (12, 13) rendues étanches l'une par rapport à l'autre et un tube (19') muni d'une pompe de circulation (37) étant conduit à travers la paroi de séparation (11), caractérisé en ce que le tube a dans au moins l'une des zones de puits une liaison par une ouverture (35, 35') avec la zone de puits (12) concernée, présente la pompe de circulation (37) dans la section de tube située au-dessous de cette ouverture (35, 35') et est muni d'une pompe de circulation supplémentaire (36, 36') dans une section de tube (19) située au-dessus de cette ouverture (35, 35').

7. Dispositif selon la revendication 6, caractérisé en ce que l'ouverture de tube (35, 35') est formée par une subdivision du tube en deux sections (19, 19') à l'endroit de subdivision.

8. Dispositif selon les revendications 6 et 7, caractérisé en ce que les sections de tube (19, 19') présentent des diamètres différents des deux côtés de la subdivision.

9. Dispositif selon l'une des revendications 6 à 8, caractérisé en ce que la section de tube supérieure (19) se termine en haut dans une chambre de passage (24') qui fait partie d'un dispositif de filtre.

10. Dispositif selon l'une des revendications 1 à 9, caractérisé en ce qu'au moins l'une des pompes de circulation (36, 37) est réversible dans son sens de circulation.

11. Dispositif selon l'une des revendications 1 à 10, caractérisé en ce que les pompes de circulation (36, 37 ; 36', 37') sont réglables indépendamment l'une de l'autre dans leur débit.

12. Dispositif selon l'une des revendications 1 - 11, caractérisé en ce que la zone de puits (12) dans laquelle se trouve l'ouverture (35) du tube (19, 19') peut être reliée en plus à une zone de puits voisine (13) par une ouverture de paroi de séparation qui peut être obturée par une vanne.
